# EUROPEAN PATENT SPECIFICATION

(11) **EP 3 762 437 B1**
(45) Date of publication and mention of the grant of the patent: **13.04.2022**
(21) Application number: 19706687.1
(22) Date of filing: 27.02.2019
(51) Int. Cl.: C08G 18/48, C08G 18/76, C08G 18/42, C08G 18/44, C08G 18/30

(54) **A PREPARATION COMPRISING THERMOPLASTIC POLYISOCYANATE POLYADDITION PRODUCT, A PROCESS FOR PREPARING THE SAME AND USE THEREOF**
PRÄPARAT MIT THERMOPLASTISCHEM POLYISOCYANATPOLYADDITIONSPRODUKT, VERFAHREN ZUR HERSTELLUNG DAVON UND VERWENDUNG DAVON
PRÉPARATION COMPRENANT UN PRODUIT DE POLYADDITION DE POLYISOCYANATE THERMOPLASTIQUE, SON PROCÉDÉ DE PRÉPARATION ET SON UTILISATION

(30) Priority: 06.03.2018 EP 18160299
(43) Date of publication of application: 13.01.2021
(73) Proprietor: BASF SE, 67056 Ludwigshafen am Rhein (DE)
(72) Inventor: RICHTER, Sebastian, Shanghai 200137 (CN); LAMMERS, Fin, 49448 Lemfoerde (DE); HARTWIG, Sebastian, 48165 Muenster (DE); POESELT, Elmar, 49448 Lemfoerde (DE); BROKERING, Sandra, 49448 Lemfoerde (DE); KATHMANN, Alisha, 49448 Lemfoerde (DE); POPPENBERG, Johannes, Wyandotte, Michigan 48192 (US)
(74) Representative: BASF IP Association
(86) International application number: PCT/EP2019/054814
(87) International publication number: WO 2019/170484

(56) References cited:
- DE-A1-102005 011 784
- US-A- 5 017 623
- US-A1- 2011 065 840
- US-A1- 2011 118 373

## Description

The present invention is directed to a preparation comprising a thermoplastic polyisocyanate polyaddition product, also referred to as TPPP, a process for preparing the same and the use thereof.

### Background of the invention

TPPP is a reaction product of suitable amounts of the building components polyisocyanate and compounds reactive towards isocyanate.

Thermoplastic polyurethane urea, also referred to as TPU-U, has been described in US 4,286,080, US 5,688,863 and US 5,739,250. These TPU-U are prepared by reacting polyol, diisocyanate and water using reaction extrusion process.

The presence of water in these TPU-U renders the production process unsatisfactory in terms of foaming, which renders it difficult to handle the process on an industrial scale. Accordingly, these techniques do not provide a stable and reproducible process without compromising on the mechanical properties and heat resistance of the finished TPPP.

Thus, it was an objective of the invention to improve the production process for a preparation comprising TPPP by reducing the troublesome foaming, thereby resulting in a stable and reproducible high quality TPPP preparation, at the same time with acceptable mechanical properties and good heat resistance.

### Summary of the invention

Surprisingly, it has been found that this objective could be achieved by using a defoamer and an emulsifier in the production process of a preparation comprising TPPP.

Accordingly, the present invention is directed to a preparation comprising a thermoplastic polyisocyanate polyaddition product, also referred to as TPPP which is obtained by reacting the building components:
(a) a polyisocyanate,
(b) a compound reactive towards isocyanate, with a number average molecular weight of at least 500 g/Mol, and
(c) water
   in the presence of
(d) a defoamer, and
(e) an emulsifier.
wherein the defoamer is a polysiloxane.

The resulting TPPP is a thermoplastic polyurethane urea, also referred to as TPU-U.

This reduces foaming and results in a stable and reproducible high quality TPPP preparation with outstanding mechanical properties especially in terms of compression set and rebound and very good heat resistance.

Another aspect of this invention are foam beads based on the preparation comprising TPPP, preferably TPU-U.

Another aspect of the present invention is directed to a process for preparing the product, also referred to as preparation, described hereinabove.

Still another aspect of the present invention is directed to the use of the product, also referred to as preparation, described hereinabove in an article.

Yet another aspect of the present invention is directed to an article comprising the product, respectively the preparation, described hereinabove.

### Detailed description

TPPP is the reaction product of polyisocyanate and a compound reactive towards isocyanate. Preferred compounds reactive towards isocyanate are compounds with a molecular weight of 500 g/mol or more. Compounds reactive towards isocyanate with a molecular weight between 49 g/mol to 499 g/mol are referred to as chain extender. Water, is another compound reactive towards isocyanate. The isocyanate and the compounds reactive towards isocyanate are also referred to as building components of the TPPP, preferably the TPU-U.

Non-building components, also referred as ingredients, refer to the defoamer, emulsifier and optionally catalyst, auxiliary substance material and/or added substance materials.

### Chain extender

In a preferred embodiment, the preparation comprising TPPP does not contain a chain extender. In another preferred embodiment small amounts of suitable chain extenders are added as one building component in the preparation comprising TPPP. This would not affect the desired properties. Small amount is any amount which is higher than 0 wt.-% and below 2 wt.-% referring to the total weight of the TPPP, preferably TPU-U, more preferably higher than 0 wt-% and below 1 wt.-%, more preferred higher than 0 wt.-% and below 0,1 wt-%.

Suitable chain extenders are C₂ to C₁₂ alkane diols, or C₂ to C₆ alkane diols. More preferably, ethanediol, 1,3-propanediol, 1,4-butanediol, 1,5-pentanediol, 1,6-hexanediol, 1,7-heptanediol, 1,8-octanediol, 1,9-nonanediol and 1,10-decanediol. Preferred chain extending agents further include dialkylene glycols having 4 to 8 carbon atoms, preferably diethylene glycol and dipropylene glycol and/or di-, tri- or tetrafunctional polyoxyalkylene polyols.

Preferred chain include branched and/or unsaturated alkanediols having preferably not more than 12 carbon atoms, preferably 1,2-propanediol, 2 methylpropanediol-1,3, 2,2-dimethylpro-panediol-1,3, 2-butyl-2-ethylpropanediol-1,3, butene-2 diol-1,4 and butyne-2-diol-1,4, diesters of terephthalic acid with glycols of 2 to 4 carbon atoms, preferably terephthalic acid bis-ethylene glycol-1,4 or -butanediol-1,4, hydroxyalkylene ethers of hydroquinone or of resorcinol, preferably 1,4-di(β-hydroxyethyl)hydroquinone or 1,3 di(β-hydroxyethyl)resorcinol, alkanolamines having 2 to 12 carbon atoms, preferably ethanolamine, 2-aminopropanol and 3-amino-2,2-dime-thylpropanol, N-alkyldialkanolamines, e.g., N-methyl- and N-ethyldiethanolamine.

Most preferred chain extenders are selected from the group consisting of ethylene glycol, diethylene glycol, triethylene glycol, 1,3-propanediol, 1,4-butanediol, 1,5-pentanediol, 1,6-hexanediol, hydroquinone-bis-2-hydroxyethyl ether and bis-2(hydroxy ethyl)-terephthalate.

### Particularly preferably is 1,4-butanediol

### Water

In another preferred embodiment, the preparation comprises TPPP which is obtained by reacting the building components:
(a) polyisocyanate,
(b) compound reactive towards isocyanate with a number average molecular weight of 500 g/mol or more, and
(c) water,
   in the presence of
(d) defoamer, and
(e) emulsifier,
wherein the defoamer is polysiloxan and this preparation does not comprise a chain extender.

### Defoamer

Defoamer is a compound which has surface active properties and prevent or suppress the foam formation caused by CO₂ degassing. The preferred defoamer according to this invention is polysiloxan

### Polysiloxane

Polysiloxane, as used herein, includes silicone in its broadest sense, that is, any polymeric structure that contains repeating silicon-oxygen groups in the backbone, side chains or cross links regardless of the substitution on the silicon atom, preferably the polysiloxan is an organic polysiloxan.

Preferred organic polysiloxanes are selected from the group consisting of polyalkylsiloxane, polyalkoxysiloxane, polyarylsiloxane, polyaralkylsiloxane, polyaryloxysiloxane, polyalicyclicsiloxane and mixtures thereof.

The aryl, aralkyl and aryloxy moieties which may be, preferably are, substituents on the siloxanes include, preferably are selected, from the group consisting of, phenyl, chlorophenyl, biphenyl, naphthyl, tolyl, ethylphenyl, propylphenyl, and phenyloxy moiety.

Preferred alkoxy moieties are linear or branched, more preferably are linear, and more preferably are selected from the group consisting of methoxy-, ethoxy-, propoxy-, butoxy-, pentoxy- and hexoxy-moiety.

In preferred embodiments of the polyalicyclicsiloxane the alicyclic rings are in particular 5- or 6-membered and may be either unsubstituted or alkyl or halogen-substituted. It is also possible to use polysiloxanes that carry cyano or aldehyde groups, such as cyanoalkylpolysiloxanes, for example poly(cyanomethyl)methylsiloxane, poly(2-cyanoethyl)methylsiloxane, poly(3-cyanopropyl)methylsiloxane, poly(4-cyanobutyl)methylsiloxane, poly(5-cyanopentyl)methylsiloxane, poly(cyanomethyl)ethylsiloxane and poly(cyanoethyl)ethylsiloxane.

In another preferred embodiment, the organic polysiloxane is an alkoxylated polysiloxane.

The alkylene oxide is preferably selected from the group consisting of ethylene oxide, propylene oxide, and butylene oxide. The alkylene oxide is either a single alkylene oxide or a mixture of alkylene oxides. In a preferred embodiment, the alkylene oxide is selected from ethylene oxide or propylene oxide, or is a mixture thereof.

The alkoxylation of the siloxane is block-wise or in random distribution.

If the alkoxylation is block-wise, in a preferred embodiment the number of repeating units in the alkylene deriving from a mixed alkylene oxide ranges from 3 to 100.

Another preferred embodiment of polysiloxane is fluorinated organopolysiloxane.

A preferred example of this group is perfluoroalkylpolysiloxane, even more preferred poly(methyl-3,3,4,4,4-pentafluorobutyl)-siloxane.

In another preferred embodiment, the organopolysiloxane is poly(alkylsiloxane).

The alkyl moieties can be linear or branched, preferably they are linear. Similarly, or in preferred embodiments, they can be substituted by at least one halogen atom, respectively are substituted by at least one halogen atom. For instance, polysiloxane with chloroethyl, chloropropyl and chlorobutyl moieties can be used, which are further preferred embodiments.

Preferred polyalkylsiloxanes are selected from the group consisting of dimethyl-, diethyl-, dipropyl- and methyl-butyl-polysiloxane. Particularly preferably, the poly(alkylsiloxane) is polydimethylsiloxane (also referred as PDMS). In a further preferred embodiment, the polyalkylsiloxane, preferably the polydimethylsiloxane, is mixed with fumed silica. Fumed silica is described under CAS no. 112945-52-5.

Accordingly, in a preferred embodiment the preparation comprises TPPP which is obtained by reacting the building components:
(a) polyisocyanate, and
(b) compound reactive towards isocyanate, with a number average molecular weight of at least 500 g/Mol, and
(c) water
   in the presence of
(d) defoamer and
(e) emulsifier,
wherein the defoamer is polyalkysiloxane, preferably polydimethylsiloxane, even more preferred mixed with fumed silica, and further preferred this preparation does not comprise a chain extender.

### Alkoxylated fatty alcohol

Alkoxylated fatty alcohols are compounds obtained by alkoxylation of fatty alcohols.

Preferably, the fatty alcohol has a hydrocarbon chain having 6 to 22 carbon atoms, which is either saturated or unsaturated hydrocarbon chain.

The alkylene oxide is preferably selected from the group consisting of ethylene oxide, propylene oxide, and butylene oxide, the alkylene oxide is either a single alkylene oxide or a mixture of alkylene oxides. In a preferred embodiment, the alkylene oxide is ethylene oxide, propylene oxide or a mixture thereof.

The alkoxylation of the fatty alcohol, as described hereinabove, may take place blockwise or in random distribution.

If the alkoxylation is block-wise, the number of repeating units in the alkylene deriving from a mixed alkylene oxide preferably ranges from 3 to 100.

Examples of commercially available alkoxylated fatty alcohols include Burst^{®} and FoamStar^{®} from BASF SE.

### Emulsifier

An emulsifier is also referred to as surfactant. A suitable emulsifier are anionic, cationic or non-ionic. In a preferred embodiment the emulsifier is non-ionic, and further preferred contains two different structural moieties, which further preferred have different polarities.

The emulsifier is preferably selected from the group consisting of ethoxylates, fatty alcohol ethoxylates, alkylphenol ethoxylates, ethoxylated amines and/or fatty acid amides, terminally blocked ethoxylates, alkyl polyglucoside, amine oxides, sulfoxides, phosphine oxides, reaction product of carboxylic acid with hydroxy group containing compound, carboxylic acid alkoxylates, more preferably selected from the group consisting of the reaction product of carboxylic acid with hydroxy group containing compound and carboxylic acid alkoxylates. The emulsifier is either a single emulsifier or a mixture of emulsifiers.

In an preferred embodiment, the carboxylic acid in the emulsifier based on carboxylic acid with hydroxy group containing compound or carboxylic acid alkoxylates is a linear, saturated or unsaturated monocarboxylic acid or a linear, saturated or unsaturated dicarboxylic acid, preferably a unsaturated monocarboxylic acid, more preferably with 2 to 36 carbon atoms, preferably with 10 to 30 carbon atoms, more preferably with, 15 to 24 carbon atoms, more preferably with 18 carbon atoms. Most preferably it is oleic acid.

The hydroxy group containing compound of the non-ionic emulsifier is preferably selected from the group consisting of ethanol, ethylene glycol, propylene-1,2-glycol, propylene-1,3-glycol, butyl-ene-1,4-glycol, butylene-2,3-glycol, hexane-1,6-diol, octane-1,8-diol, neopentyl glycol, cyclohexane dimethanol (1,4-bis-hydroxy-methylcyclohexane), 2-methyl-propane-1,3-diol, glycerol, trimethylolpropane, hexane-1,2,6-triol, butane -1,2,4-triol, trimethylolethane, pentaerythritol, quinitol, mannitol, sorbitol, methyl glycoside, diethylene glycol, triethylene glycol, tetraethylene glycol, polyethylene glycol, dipropylene glycol, polypropylene glycol, polyethylene-propylene glycol, dibutylene glycol and polybutylene glycol. In a preferred embodiment, the hydroxy group containing compounds, as described hereinabove, are end-capped by alkyl groups.

Particularly preferably, the hydroxy group containing compound of the non-ionic emulsifier is selected from the group consisting of polyethylene glycol, polypropylene glycol and polyethylene-propylene glycol.

In another preferred embodiment, carboxylic acid alkoxylates can also be, preferably are employed as suitable emulsifier. For this purpose, carboxylic acid, as described hereinabove, may be alkoxylated using suitable alkylene oxide, as described hereinabove. Preferably, the number of repeating units of the alkylene oxide range from 3 to 100. Commercially these carboxylic acid alkoxylates are available under the tradename of Emulan^{®} from BASF.

In a particularly preferred embodiment, the carboxylic acid alkoxylate is an oleic acid ethoxylate.

### Compound reactive towards isocyanate

The compounds reactive towards isocyanate have a number average molecular weight of 500 g/mol or more, further preferred from 500 g/mol to 10 × 10³ g/mol, more preferred between 500 g/mol and 5,0 × 10³ g/mol. Preferred compounds reactive towards isocyanate have an amine group, thiol group, carboxyl group or hydroxyl group. Preferred are those having an amine group or a hydroxyl group, more preferably those having a hydroxyl group.

In one preferred embodiment, the compound reactive towards isocyanate is an amine

In another preferred embodiment, the compound reactive towards isocyanate is a compound having hydroxyl groups, also referred to as polyol, with functionality between 1.8 and 2.2 more preferably between 1.9 to 2.1.

Suitable polyols for the present invention have an OH value in between 20 mg KOH/g to 230 mg KOH/g determined according to DIN 53240-3:2016-03. Preferably, in between 20 mg KOH/g to 220 mg KOH/g, or preferably in between 20 mg KOH/g to 200 mg KOH/g. More preferably, in between 25 mg KOH/g to 200 mg KOH/g, or more preferably in between 25 mg KOH/g to 190 mg KOH/g. Most preferably, the polyols have an OH value in between 30 mg KOH/g to 190 mg KOH/g.

Preferred polyols include polyethers, polyesters, polycarbonates or mixtures thereof.

### Polyether polyol

Polyether polyols are obtained by known methods, such as but not limited to, reaction between at least one starter molecule, such as ethylene glycol, propylene glycol, glycerine, pentaerythritol, trimethylolpropane, sucrose, or sorbitol, and alkylene oxide such as EO, PO, mixtures of EO and PO or tetrahydrofuran.

Preferred polyether polyols include polytetramethylene ether glycol (also referred as PTMEG), polypropylene oxide glycol and polybutylene oxide glycol. Particularly preferred is PTMEG or α-hydro-ω-hydroxypoly(oxy tetra-methylene) diol, preferably having a number average molecular weight Mₙ between 500 g/mol and 3,0 ×10³ g/mol, preferably between 600 g/mol and 2,0 × 10³ g/mol, more preferably between 700 g/mol and 1,8 × 10³ g/mol. They are commercially available under the tradename PolyTHF^{®}.

### Polyester polyol

Suitable polyester polyols are selected from the group consisting of reaction product of polyhydric alcohol, polymerization product of lactone and polymerization product of di-carboxylic acids with polyhydric alcohols. By the term "lactone", it is referred to cyclic esters of hydroxycarboxylic acids. Such polyester polyols include hydroxyl-terminated reaction products of polyhydric alcohols, polyester polyols obtained as the polymerization product of lactone, e.g. caprolactone, in conjunction with a polyol, and polyester polyols obtained by the polymerization of a di-carboxylic acid, e.g. adipic acid, with a polyhydric alcohol. Preferred polyester polyols include polymerization product of lactone or polycaprolactone and the ones obtained by the polymerization of a di-carboxylic acid with a polyhydric alcohol.

In a preferred embodiment, the polyester polyol obtained by polymerization of di-carboxylic acid with polyhydric alcohol is employed. Suitable di-carboxylic acid is at least one of C₄ to C₁₂ dicarboxylic acid, while at least one of C₂ to C₁₄ diol are suitable as polyhydric alcohols. Preferably, C₄ to C₁₂ dicarboxylic acid are selected from the group consisting of aliphatic dicarboxylic acid such as succinic acid, glutaric acid, adipic acid, suberic acid, azelaic acid and sebacic acid and aromatic dicarboxylic acid such as phthalic acid, isophthalic acid and terephthalic acid. More preferably, the dicarboxylic acid is selected from the group consisting of succinic acid, glutaric acid, adipic acid, suberic acid, phthalic acid, isophthalic acid and terephthalic acid. most preferably, it is selected from the group consisting of adipic acid, suberic acid and phthalic acid. These dicarboxylic acids can be utilized individually or in the form of mixtures.

Preferably, C₂ to C₁₄ diol is selected from the group consisting of ethylene glycol, diethylene glycol, 1,4-butanediol, 1,5-pentanediol, 1,6-hexanediol, 1,10-decanediol, 2,2-dimethyl-propane-1,3-diol, 1,3-propanediol, 2-methyl-1,3-propanediol and dipropylene glycol can be used individually or as mixtures. More preferably, it is selected from the group consisting of ethylene glycol, diethylene glycol, 1,4-butanediol, 1,5-pentanediol, 1,6-hexanediol, 1,10-decanediol or a mixture thereof. Most preferably, it is selected from the group consisting of 1,4-butanediol, 1,5-pentanediol, 1,6-hexanediol, 1,10-decanediol or a mixture thereof.

### Polycarbonate polyol

Polycarbonate polyol as suitable polyols are obtained by, such as but not limited to, the reaction of phosgene or a carbonate monomer, usually dimethyl carbonate with a diol monomer or a mixture of diol monomers. Alternatively, suitable hydroxyl terminated polycarbonates include those prepared by reacting a glycol with a carbonate. US 4,131,731, describes such hydroxyl terminated polycarbonates. The polycarbonates are linear and have terminal hydroxyl groups with essential exclusion of other terminal groups. The essential reactants are glycols and carbonates. Preferred glycols are selected from cycloaliphatic and aliphatic diols containing 4 to 40, and or even 4 to 12 carbon atoms, and from polyoxyalkylene glycols containing 2 to 20 alkoxy groups per molecule with each alkoxy group containing 2 to 4 carbon atoms. Preferred diols include aliphatic diols containing 4 to 12 carbon atoms such as 1,4-butanediol, 1,5-pentanediol, neopentyl glycol, 1,6-hexanediol, 1,6-2,2,4-trimethylhexanediol, 1,10-decanediol, hydrogenated dilinoleylglycol, hydrogenated dioleylglycol; and cycloaliphatic diols such as 1,3-cyclohexanediol, 1,4-dimethylolcyclohexane, 1,4-cyclohexanediol, 1,3-dimethylolcyclohexane, 1,4-endo methylene-2-hydroxy-5-hydroxymethyl cyclohexane, and polyalkylene glycol. The diols used in the reaction may be a single diol or a mixture of diols depending on the properties desired in the finished product. More preferably, diols are selected from the group consisting of 1,4-butanediol, 1,5-pentanediol, neopentyl glycol, 1,6-hexanediol, 1,10-decanediol, 1,3-cyclohexanediol, 1,4-dimethylolcyclohexane, 1,4-cyclohexanediol or mixture thereof. Most preferably, it is selected from 1,4-butanediol, 1,5-pentanediol, neopentyl glycol, 1,6-hexanediol or mixture thereof.

Suitable carbonates are selected from alkylene carbonates composed of a 5 to 7-member ring.

Preferred carbonates for use herein include ethylene carbonate, trimethylene carbonate, tetra-methylene carbonate, 1,2-propylene carbonate, 1,2-butylene carbonate, 2,3-butylene carbonate, 1,2-ethylene carbonate, 1,3-pentylene carbonate, 1,4-pentylene carbonate, 2,3-pentylene carbonate and 2,4-pentylene carbonate. Also, suitable herein are dialkylcarbonates, cycloaliphatic carbonates and diarylcarbonates. The dialkylcarbonates can contain 2 to 5 carbon atoms in each alkyl group and specific examples thereof are diethylcarbonate and dipropylcarbonate. Cycloaliphatic carbonates, especially dicycloaliphatic carbonates, can contain 4 to 7 carbon atoms in each cyclic structure and there can be one or two of such structures. When one group is cycloaliphatic, the other can be either alkyl or aryl. On the other hand, if one group is aryl, the other can be alkyl or cycloaliphatic.

### Polyisocyanate

The term "polyisocyanate", as used herein, refers to an isocyanate comprising at least two NCO groups, such as diisocyanates or triisocyanates, as well as dimers and trimers or biurets of the isocyanates. The most chemically relevant attribute of isocyanate chemistry is its reactivity with molecules having active hydrogens. Such active hydrogens are typically found on molecules having alcohol and amine functionalities and water.

Preferably, the polyisocyanate is an aromatic polyisocyanate. Aromatic polyisocyanates include those in which two or more of the isocyanato groups are attached directly to the aromatic ring. These may be monomeric or polymeric. By the term "polymeric", it is referred to the polymeric grade or form of the polyisocyanate comprising different oligomers and homologues.

Suitable aromatic polyisocyanates are selected from the group consisting of 1,2-, 1,3-, and 1,4-phenylene diisocyanates, triphenyl methane-4,4',4"-triisocyanate, naphthylene-1,5-diisocyanate, 2,4- and 2,6-toluene diisocyanate, 2,4'-, 4,4'- and 2,2-biphenyl diisocyanates, 2,2'-, 2,4'- and 4,4'-diphenylmethane diisocyanate, polyphenyl polymethylene polyisocyanates, 1,2-, 1,3- and 1,4-xylylene diisocyanates and m-tetramethylxylyene diisocyanate (TMXDI).

Most preferred the aromatic polyisocyanate is selected from the group consisting of 2,6-toluene diisocyanate, 2,4'-, 4,4'- and 2,2-biphenyl diisocyanates, 2,2'-, 2,4'- and 4,4'-diphenylmethane diisocyanate and polyphenyl polymethylene polyisocyanates

Particularly preferred is 4,4'-diphenylmethane diisocyanate (4,4'-MDI). This MDI is commercially available under the tradename of Lupranat^{®} from BASF.

### Catalyst

In one preferred embodiment the reaction between the polyisocyanate and the compound reactive towards isocyanate is in the presence of a catalyst. The catalyst is preferably selected from the group of tertiary amines, preferably triethylamine, dimethylcyclohexylamine, N-methylmorpholine, N,N'-dimethylpiperazine, 2-(dimethylaminoethoxy)ethanol, diazabicyclo[2.2.2]octane, and the like, and also, in particular, organometallic compounds such as titanic esters, bismuth carboxylates, iron compounds such as iron(III) acetylacetonate, tin compounds, preferably, tin diacetate, tin dioctoate, tin dilaurate, or the tin dialkyl salts of aliphatic carboxylic acids, preferably dibutyltin diacetate, dibutyltin dilaurate.

The catalysts are preferably used in amounts of 0.0001 to 0.1 part by weight per 100 parts by weight of the compound reactive towards isocyanate.

### Auxiliary

The preparation comprising TPPP, as described hereinabove, in preferred embodiments further comprises auxiliary substance materials and/or added substance materials. Auxiliary substance materials and/or added substance materials take the form of a single substance or of a mixture of two or more auxiliary substance materials and/or added substance materials. Examples include fillers, flame retardants, nucleators, oxidation inhibitors, lubricating and demolding aids, dyes and pigments, optionally stabilizers, preferably against hydrolysis, light, heat or discoloration, organic and/or inorganic fillers, reinforcing agents and/or plasticizers.

Stabilizers for the purposes of the present invention are additives to protect a plastic or a mixture of plastics from harmful environmental influences. Examples are primary and secondary antioxidants, hindered amine light stabilizers, UV absorbers, hydrolysis control agents, quenchers and flame retardants. Examples of commercial stabilizers are given in Plastics Additive Handbook, 5th Edition, H. Zweifel, ed., Hanser Publishers, Munich, 2001 ([1]), p.98 S136. Additionally, wax may also be used as suitable stabilizers.

Fillers, especially reinforcing fillers, include the customary, familiar organic and inorganic fillers, reinforcing agents and weighting agents. Specific examples are inorganic fillers such as silicatic minerals, for example sheet-silicates such as antigorite, serpentine, hornblendes, amphibols, chrisotile, talc; metal oxides, such as kaolin, aluminum oxides, aluminum silicate, titanium oxides and iron oxides, metal salts such as chalk, barite and inorganic pigments, such as cadmium sulfide, zinc sulfide and also glass particles. Useful organic fillers include for example carbon black, melamine, expandable graphite, rosin, cyclopentadienyl resins, graft polyols and graft polymers.

By way of reinforcing fillers it is preferable to use fibers, for example carbon fibers or glass fibers, particularly when a high level of heat resistance or very high stiffness is demanded, in which case the fibers may be endowed with adhesion promoters and/or sizers.

Organic and inorganic fillers may be used singly or as mixtures, and are typically added in amounts in the range of ≥ 0.5 wt.-% to ≤ 50 wt.-%, preferably ≥ 1 wt.-% to ≤ 30 wt.-% based on the weight of the product, in a preferred embodiment based on the preparation.

Suitable flame retardants include, for example, tricresyl phosphate, tris(2-chloroethyl) phosphate, tris(2-chloropropyl) phosphate, tris(1,3-dichloropropyl) phosphate, tris(2,3-dibromo¬propyl) phosphate and tetra-bis(2-chloroethyl) ethylene diphosphate.

Aside from the aforementioned halogen-substituted phosphates, it is also possible to use inorganic flame retardants such as red phosphorus, aluminum oxide hydrate, antimony trioxide, arsenic trioxide, ammonium polyphosphate and calcium sulfate or cyanuric acid derivatives, e.g., melamine, or mixtures of two or more flame retardants, e.g., ammonium phosphates and melamine, and also optionally starch and/or expandable graphite to confer flame retardancy on the polyurethane elastomers formed according to the present invention. It has generally proved advantageous to use from 5 parts by weight to 50 parts by weight and preferably from 5 parts by weight to 25 parts by weight of the recited flame retardants or flame-retardant mixtures for every 100 parts by weight of the compound reactive towards isocyanate and the polyisocyanate, as described hereinabove.

As nucleators there may be used, for example, talc, calcium fluoride, sodium phenylphosphinate, aluminum oxide and finely divided polytetrafluoroethylene in amounts up to 5 wt.-%, based on the total weight of the product, in a preferred embodiment based on the preparation.

Suitable oxidation retarders and heat stabilizers which may be added to the TPPP include, for example, halides of metals of group I of the periodic table, e.g., sodium halides, potassium halides, lithium halides, optionally combined with copper(I) halides, e.g., chlorides, bromides or iodides, sterically hindered phenols, hydroquinones, and also substituted compounds of these groups and mixtures thereof, which are preferably used in concentrations up to 1 wt.-% based on the weight of the compound reactive towards isocyanate and the polyisocyanate.

Examples of hydrolysis control agents are various substituted carbodiimides, such as preferably 2,2',6,6'-tetraisopropyldiphenylcarbodiimide or carbodiimides based on 1,3-bis(1-methyl-1 isocyanatoethyl)benzene as described for example in the documents DE 19821668 A1, US 6,184,410, DE 10004328 A1, US 6,730,807, EP 0 940 389 B1 or US 5,498,747, which are preferably used in amounts up to 4.0 wt.-%, more preferably in between 0.1 wt.-% to 2.5 wt.-% based on the weight of the compound reactive towards isocyanate and the polyisocyanate.

Lubricating and demolding agents, generally likewise added in amounts up to 1 wt.-%, based on the weight of the compound reactive towards isocyanate and the polyisocyanate are stearic acid, stearyl alcohol, stearic esters and amides and also the fatty acid esters of pentaerythritol. It is further possible to add organic dyes, such as nigrosine, pigments, e.g., titanium dioxide, cadmium sulfide, cadmium sulfide selenide, phthalocyanines, ultramarine blue or carbon black.

Further particulars of the abovementioned auxiliary and added-substance materials are found in the trade literature, for example in Plastics Additive Handbook, 5th edition, H. Zweifel, ed, Hanser Publishers, Munich, 2001, p.98-S136.

The preparation comprising TPPP, as described hereinabove, has improved mechanical properties, such as but not limited to, tensile strength, abrasion, compression set and rebound. These and other physical or chemical properties of the TPPP and/or its components may be determined using any suitable standard technique known to the person skilled in the art. For instance, shore hardness can be determined using ASTM D2240:2015, tensile strength by DIN 53504:2017-03, elongation at break by DIN 53504:2017-03, abrasion by DIN ISO 4649:2014-03, compression set by DIN ISO 815-1:2014 and rebound by DIN 53512.

In a preferred embodiment the TPPP, more preferably the TPU-U, is in the form of pellets or powder.

In one embodiment the TPPP, preferably TPU-U, is foamed, more preferred either pellets or powder of TPPP, preferably of TPU-U, is foamed. These foamed TPPP, preferably these TPU-U pellets or powder is also referred to as expanded TPPP particles, the preferred expanded TPU-U also as TPU-U particles, or shortly as eTPPP particles, respectively eTPU-U particles. Suitable blowing agents are selected based on the method and the precise conditions and include, but are not limited to organic liquids or inorganic gases, or a mixture thereof. Liquids that can be used comprise halogenated hydrocarbons, or saturated, aliphatic hydrocarbons, in particular those having from 3 to 8 carbon atoms. Suitable inorganic gases are nitrogen, air, ammonia, or carbon dioxide. Further details can be found in, for e.g. WO2005/023920, WO2007/082838, WO2010/136398, WO2013/153190, WO2013/153190, WO2014/198779, WO2015/055811 WO2017/030835, US2017/0036377, US2016/0271847, US2016/0108198, WO2014/150119, WO2014/150124 and WO2016/131671.

### Process

Another aspect of the present invention relates to a process for producing the preparation comprising the TPPP, as described hereinabove. Such a process can be a "one-shot process" or a "prepolymer process". In a one-shot process, all the building components are reacted simultaneously, in the presence of the ingredients optionally comprising auxiliary substance material, added substance material, and catalyst to obtain the preparation comprising TPPP. However, a prepolymer process generally requires at least one step of reacting the compound reactive towards isocyanate with the polyisocyanate to obtain a prepolymer, before obtaining the preparation comprising TPPP.

Suitable processes of interest that may be employed to obtain the preparation comprising TPPP are reactive extrusion process, belt line process, belt cast process and hand cast process, the belt line process and the belt cast process are preferred. For instance, reactive extrusion process is described in WO2017/165221. Belt line process requires a continuously running belt with the equipment used for carrying out the process, being divided into various zones, such as a mixing zone, reaction zone and cooling zone. Product handling in a belt line process is easier as compared to other processes. In a belt cast process, the product does not directly fall onto the belt, but into a mold. Prior to granulation of the product, a demolding step is required in a belt cast process. Hand cast is the most commonly used technique for obtaining lab-scale products.

Particularly preferably, a belt line process or the belt cast process is used for obtaining the preparation comprising TPPP. The belt line process does not requires degassing the CO₂ derived from the reaction of water and isocyanate as is required e.g. in the extrusion process. Moreover, with the use of the defoamer and the emulsifier, as described hereinabove, CO₂ handling is lot easier.

Accordingly, the process for preparing the preparation comprising TPPP comprises the following steps:
(A1) mixing the compound reactive towards isocyanate with the defoamer and the emulsifier to obtain a pre-mixture, and
(A2) introducing the polyisocyanate to the pre-mixture or introducing the pre-mixture into isocynate to obtain a reaction mixture, preferably at a temperature in the range of 50°C to 150°C.

Water, if used, is added to either the pre-mixture or the isocyanate, to obtain the TPPP, preferably the TPU-U. ingredients and /or catalyst is added, preferably to the pre-mixture.

Mixing in step (A1) is carried out using suitable mixing means.

The reaction mixture reacts to form the TPPP. In the belt line or belt cast process this occurs in the reaction zone. preferably the temperature in the reaction zone is in between 120°C and 400°C. The TPPP is fed on a continuously running belt to transfer to the cooling zone. Although, any suitable belt speed of the running belt may be maintained, typically the continuously running belt has a belt speed in between 0.1 m/min to 10 m/min. The product from the cooling zone is further subjected to granulation and/or pelletization.

Suitable amounts of the building components and the ingredients, as described hereinabove are used in the process, as described hereinabove. Typically, the amount of water is in between 0.1 wt.-% to 3.0 wt.-% based on the total weight of the building components. Preferably, it is in between 0.1 wt.-% to 2.8 wt.-%, preferably in between 0.15 wt.-% to 2.8 wt.-%, preferably in between 0.2 wt.-% to 2.8 wt.-%. More preferably, it is in between 0.2 wt.-% to 2.5 wt.-%, more preferably in between 0.25 wt.-% to 2.5 wt.-%, more preferably in between 0.3 wt.-% to 2.5 wt.-%. Most preferably, it is in between 0.3 wt.-% to 2.2 wt.-%, or most preferably in between 0.35 wt.-% to 2.2 wt.-%, or most preferably in between 0.4 wt.-% to 2.2 wt.-%. In a particularly preferred embodiment, it is in between 0.4 wt.-% to 2.0 wt.-% based on the total weight of the building components.

The defoamer, as described hereinabove, is present in an amount in between 0.05 wt.-% to 2.0 wt.-% based on the total weight of the product, preferably the TPPP. Preferably, it is in between 0.06 wt.-% to 2.0 wt.-%, or preferably in between 0.06 wt.-% to 1.8 wt.-%, or preferably in between 0.06 wt.-% to 1.6 wt.-%, or preferably in between 0.06 wt.-% to 1.4 wt.-%, or preferably in between 0.06 wt.-% to 1.2 wt.-%. More preferably, it is in between 0.06 wt.-% to 1.0 wt.-%, or more preferably in between 0.07 wt.-% to 0.8 wt.-%, or more preferably in between 0.08 wt.-% to 0.8 wt.-%, or more preferably in between 0.08 wt.-% to 0.7 wt.-%. Most preferably, it is in between 0.09 wt.-% to ≤ 0.7 wt.-%, or most preferably in between 0.1 wt.-% to 0.7 wt.-%, or most preferably in between 0.11 wt.-% to 0.7 wt.-%, or most preferably in between 0.12 wt.-% to 0.7 wt.-%, or most preferably in between 0.13 wt.-% to 0.6 wt.-%, or most preferably in between 0.15 wt.-% to 0.6 wt.-%, or most preferably in between 0.16 wt.-% to 0.6 wt.-%, or most preferably in between 0.17 wt.-% to 0.6 wt.-%, or most preferably in between 0.18 wt.-% to 0.6 wt.-%. In a particularly preferred embodiment, it is in between 0.19 wt.-% to 0.6 wt.-% based on the total weight of the product, preferably the TPPP.

The emulsifier, as described hereinabove, is present in an amount in between 0.1 wt.-% to 3.0 wt.-% based on the total weight of the product, preferably the TPPP. Preferably, it is in between 0.15 wt.-% to 3.0 wt.-%, or preferably in between 0.15 wt.-% to 2.8 wt.-%, or preferably in between 0.15 wt.-% to 2.5 wt.-%. More preferably, it is in between 0.2 wt.-% to 2.5 wt.-%, or more preferably in between 0.2 wt.-% to 2.2 wt.-%, or more preferably in between 0.2 wt.-% to 2.0 wt.-%. Most preferably, it is in between 0.25 wt.-% to 2.0 wt.-%, or most preferably in between 0.25 wt.-% to 1.8 wt.-%, or most preferably in between 0.25 wt.-% to 1.5 wt.-%. In a particularly preferred embodiment, it is in between 0.3 wt.-% to 1.5 wt.-% based on the total weight of the product, preferably the TPPP.

Another aspect of the present invention relates to use of the TPPP, as described hereinabove, in an article, preferably the use of the preparation comprising the TPPP in an article. The TPPP of the present invention, preferably the preparation comprising TPPP, owing to their improved mechanical properties and heat resistance, can be used in articles.

The preparation comprising the TPPP preferably has the form of a granulate or a powder and can be processed to give products such as films, foils, fiber, coatings, seals and moldings. Preferred moldings are shoe soles, rollers, cladding in automobiles, hoses, coatings, cables, profiles, laminates, floors for buildings and transport, plug connectors, cushion, saddle, cable plugs, folding bellows, drag cables, solar modules, wiper blades, cable sheathing, gaskets, drive belts, nonwoven textiles, damping or damping elements. Further the TPPP, preferably the TPU-U is used as modifier for thermoplastic materials. Each of these uses is a single application. Preferred processes for the production of above mentioned products are injection molding, calendaring, powder sintering, or extrusion.

Yet another aspect of the present invention relates to an article comprising the TPPP described hereinabove, preferably the preparation comprising the TPPP. Such article may be obtained using any suitable techniques. For instance, such article may be an extruded article calendared article, powder sintering article, or an injection molded article. Articles of any desired shape, size and dimension may be obtained using the present invention TPPP, preferably the preparation comprising TPPP, as described hereinabove, and with suitable techniques known to the person skilled in the art.

### Foam Beads

Another aspect of this invention are foam beads, and also molded bodies produced therefrom, based on the preparation comprising TPPP, preferably TPU-U. These foam beads have many possible uses (see e.g. WO 94/20568, WO 2007/082838 A1, WO2017030835, WO 2013/153190 A1, WO2010010010).

In a preferred embodiment the term foam bead denotes a foam in the form of a bead where the average diameter of the foam bead is from 0.2 to 20 mm, preferably from 0.5 to 15 mm and in particular from 1 to 12 mm. When foam beads are not spherical, e.g. are elongate or cylindrical, diameter means the longest dimension.

In a preferred embodiment the bulk density of the foam beads of the invention is from 50 g/l to 200 g/l, preferably from 60 g/l to 180 g/l, particularly preferably from 80 g/l to 150 g/l. Bulk density is measured by a method based on DIN ISO 697, but when the above values are determined, unlike in the standard, a vessel of volume 10 l is used instead of a vessel of volume 0.5 I, because a measurement using a volume of only 0.5 l is too imprecise specifically when the foam beads have low density and high mass.

The foam beads can be produced by the familiar processes known in the prior art via
i. providing of the preparation comprising TPPP, preferably TPU-U;
ii. impregnating of the preparation with a blowing agent under pressure;
iii. expanding the preparation by means of pressure decrease.

Further details of suitable methods can be found in, for e.g. WO2005/023920, WO2007/082838, WO2010/136398 WO2013/153190, WO2013/153190, WO2014/198779, WO2015/055811 WO2017/030835, US2017/0036377, US2016/0271847, US2016/0108198, WO2014/150119, WO2014/150124 and WO2016/131671.

The quantity of blowing agent is preferably from 0.1 to 40 parts by weight, in particular from 0.5 to 35 parts by weight and particularly preferably from 1 to 30 parts by weight, based on 100 parts by weight of the quantity used of the TPPP, preferably the TPU-U.

One embodiment of the abovementioned process comprises
i. providing the preparation comprising the TPPP, preferably the TPU-U of the invention in pellet form;
ii. impregnating the pellets with a blowing agent under pressure;
iii. expanding the pellets by means of pressure decrease.

Another embodiment of the abovementioned process comprises a further step:
i. providing the TPPP, preferably the TPU-U in pellet form;
ii. impregnating the pellets with a blowing agent under pressure;
iii. reducing the pressure to atmospheric pressure without foaming of the pellets, optionally via prior reduction of the temperature;
iv. foaming of the pellets via a temperature increase.

The average minimal diameter of the pellets here is preferably from 0.2 to 10 mm (determined by way of 3D evaluation of the pellets, e.g. by way of dynamic image analysis using a PartAn 3D optical measurement apparatus from Microtrac).

The average mass of the individual pellets is preferably in the range from 0.1 to 50 mg, more preferably in the range from 4 to 40 mg and particularly preferably in the range from 7 to 32 mg. This average mass of the pellets (particle weight) is determined as arithmetic average by 3 weightings of in each case 10 pellets.

One embodiment of the abovementioned process comprises the impregnation of the pellets with a blowing agent under pressure followed by expansion of the pellets in step (ii) and (iii):
ii. impregnating the pellets in the presence of a blowing agent under pressure at elevated temperatures in a suitable, closed reaction vessel (e.g. autoclave)
iii. suddenly depressurizing without cooling

The impregnation in step ii) here can take place in the presence of water, and also optionally of suspension auxiliaries, or only in the presence of the blowing agent, with no water present.

Examples of suitable suspension auxiliaries are water-insoluble inorganic stabilizers such as tricalcium phosphate, magnesium pyrophosphate, metal carbonates; and also polyvinyl alcohol and surfactants such as sodium dodecyl arylsulfonate. Quantities used of these are usually from 0.05 to 10% by weight, based on preparation comprising the TPPP, preferably the TPU-U.

The impregnation temperatures depend on the pressure selected and are in the range from 100 to 200°C, the pressure in the reaction vessel here being from 2 to 150 bar, preferably from 5 to 100 bar, particularly preferably from 20 to 60 bar, and the impregnation time being generally from 0.5 to 10 hours.

The conduct of the process in suspension is known to the person skilled in the art and is described by way of example in detail in WO2007/082838.

When the process is carried out in the absence of the blowing agent, care must be taken to avoid aggregation of the pellets.

Examples of suitable blowing agents for carrying out the process in a suitable closed reaction vessel are organic liquids and gases which are in a gaseous state under the processing conditions, for example hydrocarbons or inorganic gases, or mixtures of organic liquids and, respectively, gases and of inorganic gases, where these can likewise be combined.

Examples of suitable hydrocarbons are halogenated or non-halogenated, saturated or unsaturated aliphatic hydrocarbons, preferably non-halogenated, saturated or unsaturated aliphatic hydrocarbons.

Preferred organic blowing agents are saturated, aliphatic hydrocarbons, in particular those having from 3 to 8 carbon atoms, for example butane or pentane.

Suitable inorganic gases are nitrogen, air, ammonia and carbon dioxide, preferably nitrogen or carbon dioxide, and mixtures of the abovementioned gases.

In another embodiment, the impregnation of the pellets with a blowing agent under pressure comprises processes followed by expansion of the pellets in step (ii) and (iii):
ii. impregnation of the pellets in the presence of a blowing agent under pressure at elevated temperatures in an extruder
iii. under conditions that prevent uncontrolled foaming, pelletizing of the composition emerging from the extruder.

Suitable blowing agents in this process variant are volatile organic compounds with boiling point from -25°C to 150°C at atmospheric pressure of 1013 mbar, in particular from -10°C to 125°C. Hydrocarbons (preferably halogen-free) have good suitability, in particular C4-C10-alkanes, preferably the isomers of butane, of pentane, of hexane, of heptane, of octane, and of Isopentane, particularly preferably of isopentane. Other possible blowing agents are moreover bulkier compounds or functionalized hydrocarbons, for example alcohols, ketones, esters, ethers and organic carbonates.

The preparation comprising TPPP, preferably TPU-U, is mixed, under pressure in step (ii) in an extruder, with melting, with the blowing agent, which is introduced into the extruder. The mixture comprising blowing agent is extruded. The strands from the mixture coming out of the extruder expand to foamed strands. These foamed strands are cut into pieces. In a preferred embodiment the strands coming out of the extruder are counterpressure controlled, preferably with water. In a preferred embodiment the pellets are achieved by underwater pelletization.

Conducting of the process via extrusion is known to the person skilled in the art and is described by way of example in detail in WO 2007/082838, and also in WO 2013/153190 A1. Extruders that can be used are any of the conventional screw-based machines, in particular single-screw and twin-screw extruders (e.g. ZSK extruders from Werner & Pfleiderer), co-kneaders, Kombiplast machines, MPC kneading mixers, FCM mixers, KEX kneading screw-extruders and shear-roll extruders of the type described by way of example in Saechtling (Ed.), Kunststoff-Taschenbuch [Plastics handbook], 27th Edn., Hanser-Verlag, Munich 1998, Chapters 3.2.1 and 3.2.4. The extruder is preferably operated at a temperature at which the MATERIAL takes the form of melt, preferably at from 120°C to 250°C, in particular from 150 to 210°C, and at a pressure, after the addition of the blowing agent, of from 40 to 200 bar, preferably from 60 to 150 bar, particularly preferably from 80 to 120 bar, in order to ensure homogenization of the blowing agent with the melt.

The process here can be conducted in an extruder or in an arrangement of one or more extruders. It is thus possible by way of example that the components are melted and blended, with injection of a blowing agent, in a first extruder. In the second extruder, the impregnated melt is homogenized and the temperature and/or the pressure is adjusted. If by way of example three extruders are combined with one another, it is equally possible that the mixing of the components and the injection of the blowing agent are divided over two different process components. If, as is preferred, only one extruder is used, all of the process steps - melting, mixing, injection of the blowing agent, homogenization and adjustment of the temperature and/or of the pressure - are carried out in one extruder.

Alternatively, in the methods described in WO2014150122 or WO2014150124 A1, it is possible to produce the corresponding foam bead, which may be coloured, directly from the pellets in that the corresponding pellets are impregnated with a supercritical liquid and are removed from the supercritical liquid, this being followed by (i) the product being immersed in a heated fluid or (ii) the product being irradiated (for example with infrared or microwave radiation).

Examples of suitable supercritical liquids are those described in WO2014150122, herein incorporated by refernece, preferably carbon dioxide, nitrogen dioxide, ethane, ethylene, oxygen or nitrogen, more preferably carbon dioxide or nitrogen.

The supercritical liquid in a preferred embodiment comprises a polar liquid with a Hildebrand solubility parameter equal to or greater than 9 MPa^{1/2}.

In preferred embodiment the supercritical fluid or the heated fluid also comprises a colorant, thus giving a coloured foamed article.

The present invention also includes a moulded body produced from the foam beads of the invention.

The corresponding moulded bodies can be produced by methods known to the person skilled in the art.

A preferred process for the production of a foam moulding comprises the following steps:
(i) introduction of the foam beads of the invention in a corresponding mould,
(ii) fusion of the foam beads of the invention from step (i).

The fusion in step (ii) preferably takes place in a closed mould, where the fusion can take place via gases such as steam, hot air (e.g. as described in EP1979401B1), or radiation (microwaves or radio waves).

The temperature during the fusion of the foam beads is in the vicinity of, the melting point, preferably below the melting point of the polymer from which the foam bead has been produced. For the polymers commonly used, the temperature for the fusion of the foam beads is accordingly from 100°C to 240°C, preferably from 120 to 220°C.

Temperature profiles/residence times can be determined individually, preferably on the basis of the processes described in EP2872309B1.

The fusion by way of radiation generally takes place in the frequency range of microwaves or radio waves, optionally in the presence of water or of other polar liquids, e.g. microwave-absorbing hydrocarbons having polar groups (examples being esters of carboxylic acids and of diols or triols, other examples being glycols and liquid polyethylene glycols), and can be achieved by a method based on the processes described in EP3053732A and WO16146537.

As stated above, the foam bead can also comprise colorants. Colorants can be added here in various ways.

In one embodiment, the foam beads produced can be coloured after production. In this case, the corresponding foam beads are brought into contact with a carrier liquid comprising a colorant, the polarity of the carrier liquid (CL) being suitable to achieve sorption of the carrier liquid into the foam bead. The method can be based on the methods described in the EP application with application number 17198591.4.

Preferred examples of suitable colorants are inorganic and organic pigments. Preferred examples of suitable natural or synthetic inorganic pigments are carbon black, graphite, titanium oxides, iron oxides, zirconium oxides, cobalt oxide compounds, chromium oxide compounds, copper oxide compounds. Examples of suitable organic pigments are azo pigments and polycyclic pigments.

In another embodiment, the colour can be added during the production of the foam bead. In a preferred example, the colorant can be added into the extruder during the production of the foam bead by way of extrusion.

In another preferred embodiment material that has already been coloured is used as starting material for the production of the foam bead which is extruded or - is expanded in the closed vessel by the abovementioned processes.

In another preferred embodiment the supercritical liquid or the heated liquid comprises a colorant. Details are described in WO 2014/150122.

The density and compression properties of the resultant moulded bodies are related. The density of the mouldings produced is advantageously from 75 to 375 kg/m³, preferably from 100 to 300 kg/m³, particularly preferably from 150 to 200 kg/m³ (DIN EN ISO 845, October 2009).

The ratio of the density of the moulding to the bulk density of the foam beads of the invention here is preferably from 1.5 to 2.5, more preferably from 1.8 to 2.0.

The invention also includes the use of foam beads of the invention for the production of a moulded body for shoe intermediate soles, shoe insoles, shoe combi-soles, bicycle saddles, bicycle tyres, damping elements, cushioning, mattresses, underlays, grips, and protective films, in components in the automobile-interior sector and automobile-exterior sector, in balls and sports equipment, or as floorcovering, in particular for sports surfaces, running tracks, sports halls, children's play areas and walkways.

Examples of embodiments of the present invention are listed below, but do not restrict the present invention. In particular, the present invention also comprises embodiments resulting from the dependencies stated below, therefore providing combinations:

### Examples

### Compounds

| Polyol | OH value (mg KOH/g) | Functionality | Type |
|---|---|---|---|
| Polyol 1 | 113.3 | 2 | Polytetrahydrofuran having Mn of 1000 g/mol, obtained from BASF |
| Polyol 2 | 55.9 | 2 | Polytetrahydrofuran having Mn of 1000 g/mol, obtained from BASF |
| Polyol 3 | 56 | 2 | Polyester polyol based on adipic acid, 1,4-butanediol and 1,6-hexanediol, obtained from BASF |
| Polyol 4 | 56 | 2 | Polycaprolactone obtained from BASF |
| Polyol 5 | 56 | 2 | Copolycarbonatediol based on 1,5-pentanediol and 1,6-hexanediol, obtained from UBE Chemical Europe |

| | |
|---|---|
| Isocyanate | 4,4'-diphenylmethane diisocyanate obtained from BASF |
| Chain extender | 1,4-butanediol obtained from BASF |
| Defoamer | Polydimethylsiloxane obtained from BASF |
| Emulsifier | Oleic acid ester obtained from BASF |
| Stabilizer 1 | Stabilizer package comprising sterically hindered phenols, polymeric hindered amines and oxanilide derivatives |
| Stabilizer 2 | Wax based on ethylene bis-stearamide |

### Standard methods

| | |
|---|---|
| Number average molecular weight (Mn) | DIN 55672-1: 2016-03 |
| OH value | DIN 53240-3:2016-03 |
| Density | DIN EN ISO 845:2009-10 |
| Shore hardness | ASTM D2240:2015 |
| Tensile strength | DIN 53504:2017-03 |
| Elongation at break | DIN 53504:2017-03 |
| Abrasion wear | DIN ISO 4649:2014-03 |
| Compression set | DIN ISO 815-1:2014 |
| Rebound | DIN 53512 |

### General synthesis of preparation comprising TPPP, preferably TPU-U

The compounds as mentioned in Table 1a and 1b were mixed at 80°C and stirred. The resultant mixture was heated through the exothermic reaction to 90°C. The obtained mixture was purred onto a Teflon coated mold to obtain a hand casted slab, which is annealed for 15 h at 80°C and subsequently granulated and injection molded.

Table 1a and 1b hereinbelow summarize the comparative (CE) and inventive examples (IE) obtained using the general synthesis, as described hereinabove. The numbers indicate the parts used in the respective preparation.

**Table 1a: Standard composition for Comparative examples (CE)**

| | CE 1a | CE 2a | CE 3a |
|---|---|---|---|
| | | | |
| Polyol 1 [g] | 550 | 900 | 1000 |
| Polyol 2 [g] | 550 | --- | --- |
| Chain extender [g] | 84.11 | 87.37 | 136.74 |
| Isocyanate 1 [g] | 440 | 468 | 630 |
| | | | |
| Stabilizer 1 [g] | 20.56 | 14.7 | 18.74 |

**Table 1b: Standard composition for Inventive examples**

| | IE 1a | IE 2b | IE 3b | IE 4 | IE 5 | IE 6 |
|---|---|---|---|---|---|---|
| | | | | | | |
| Polyol 1 [g] | 1080.00 | 1010.00 | 960.00 | --- | --- | --- |
| Polyol 3 [g] | --- | --- | --- | 1150.00 | --- | --- |
| Polyol 4 [g] | --- | --- | --- | --- | 1110.00 | |
| Polyol 5 [g] | --- | --- | --- | --- | --- | 1100.00 |
| Water [g] | 10.12 | 15.03 | 20.23 | 15.3 | 14.79 | 14.67 |
| Isocyanate 1 [g] | 417.63 | 467.94 | 527.51 | 355.09 | 349.09 | 343.08 |
| | | | | | | |
| Defoamer [g] | 3.03 | 3.00 | 3.03 | 3.05 | 3.05 | 2.97 |
| Emulsifier [g] | 6.07 | 6.01 | 6.07 | 6.10 | 6.10 | 7.41 |
| Stabilizer 1 [g] | 15.07 | 14.93 | 15.08 | 15.20 | 14.74 | 14.83 |

The above preparation comprising TPU-U (both inventive and comparative) were tested for their mechanical properties. Table 2 below summarizes the results obtained.

**Table 2: Mechanical properties of the preparation comprising TPU-U from Table 1a and 1b.**

| | CE 1a | IE 1b | CE 2a | IE 2b | CE 3a | IE 3b | IE 4 | IE 5 | IE 6 |
|---|---|---|---|---|---|---|---|---|---|
| Shore A | 77 | 75 | 81 | 81 | 87 | 85 | 79 | 74 | 78 |
| Tensile strength [MPa] | 42 | 41 | 41 | 42 | 45 | 44 | 40 | 58 | 55 |
| Elongation at break [%] | 640 | 430 | 640 | 470 | 600 | 450 | 540 | 570 | 450 |
| Abrasion [mm³] | 34 | 44 | 36 | 31 | 35 | 30 | 43 | 21 | 23 |
| Compression set (72h/ 23°C/ 30min) [%] | 26 | 6 | 26 | 7 | 25 | 5 | 8 | 11 | 11 |
| Compression set (24h/ 70°C/ 30min) [%] | 38 | 17 | 38 | 16 | 45 | 13 | --- | --- | 16 |
| Compression set (24h/ 80°C/ 30min) [%] | --- | --- | --- | --- | --- | --- | 18 | 9 | 18 |
| Rebound [%] | 69 | 75 | 60 | 76 | 54 | 73 | 73 | 74 | --- |

General synthesis of preparation comprising TPPP, preferably TPU-U using belt line process:
All compounds from Table 3 below were continuously dosed into a reaction vessel. The reaction mixture was stirred at 1000 rpm and continuously poured on a running belt. The belt was running at 0.8 m/min for about 8 min through a hot temperature zone with 200 - 350°C and then through a cooling zone for another 4 min. The obtained material slab was continuously granulated and injection molded to form test specimen.

**Table 3: Standard composition for belt line process, the numbers indicate the respective parts in the preparation**

| | IE 7 |
|---|---|
| Building components | |
| Polyol 1 [g] | 236.5 |
| Water [g] | 2.2 |
| Isocyanate 1 [g] | 90.5 |
| Ingredients | |
| Defoamer [g] | 0.7 |
| Emulsifier [g] | 1.6 |
| Stabilizer 1 [g] | 3.3 |
| Stabilizer 2 [g] | 0.5 |

| Mechanical properties | |
|---|---|
| Shore A | 76 |
| Tensile strength [MPa] | 56 |
| Elongation at break [%] | 580 |
| Abrasion [mm3] | 45 |
| Compression set (72h/ 23 °C/ 30min) [%] | 12 |
| Compression set (24h/ 70 °C/ 30min) [%] | 17 |
| Rebound [%] | 73 |

As is evident from the examples above, the mechanical properties of the inventive preparation comprising TPU-U show drastic improvement, especially the compression set values. The compression set values, both at room temperature and elevated temperature, have improved in comparison to the CEs 1a, 2a and 3a (see IE 1b, 2b and 3b in Table 2). Moreover, the acceptable properties of the preparation comprising TPU-U obtained in the belt line process is also evident in IE 7. This confirms that the ingredients- defoamer and emulsifier, when used in the preparation comprising TPU-U, results in the improvement of the mechanical properties through controlled degassing of CO₂.

## Claims

1. A preparation comprising thermoplastic polyisocyanate polyaddition product which is obtained by reacting the building components:
(a) polyisocyanate, and
(b) compound reactive towards isocyanate,with a number average molecular weight of at least 500 g/Mol
(c) water
in the presence of
(d) at least one defoamer, and
(e) at least one emulsifier
wherein the defoamer is a polysiloxane.

2. The preparation according to claim 1, wherein the product is a thermoplastic polyurethane-urea (TPU-U).

3. The preparation according to one of claim 1 to 2, wherein the product is obtained without chain extender.

4. The preparation according to one of claim 1 to 3, wherein the defoamer is an organo polysiloxane selected from the group consisting of poly(alkylsiloxane), poly(alkoxysiloxane), poly(arylsiloxane), poly(aralkylsiloxane), poly(aryloxysiloxane), poly(alicyclicsiloxane), or is a mixtures thereof, preferably the polysiloxane is poly(alkylsiloxane), more preferably polydimethylsiloxane.

5. The preparation according to one of claims 1 to 4, wherein the emulsifier is a surfactant, preferably a non-ionic surfactant.

6. The preparation according to claim 5, wherein the surfactant is a reaction product of a carboxylic acid with a hydroxy group containing compound and wherein the carboxylic acid is a linear, saturated or unsaturated C₂ to C₃₆ monocarboxylic acid or a linear, saturated or unsaturated C₂ to C₃₆ dicarboxylic acid, preferably a linear, saturated or unsaturated C₁₂ to C₂₀ monocarboxylic acid, more preferably oleic acid.

7. The preparation according to claim 6, wherein the hydroxy group containing compound is selected from the group consisting of ethanol, ethylene glycol, propylene-1,2-glycol, propylene-1,3-glycol, butylene-1,4-glycol, butylene-2,3-glycol, hexane-1,6-diol, octane-1,8-diol, neopentyl glycol, cyclohexane dimethanol (1,4-bis-hydroxy-methylcyclohexane), 2-methyl-propane-1,3-diol, glycerol, trimethylolpropane, hexane-1,2,6-triol, butane -1,2,4-triol, trimethylolethane, pentaerythritol, quinitol, mannitol, sorbitol, methyl glycoside, diethylene glycol, triethylene glycol, tetraethylene glycol, polyethylene glycol, dipropylene glycol, polypropylene glycol, polyethylene-propylene glycol, dibutylene glycol and polybutylene glycol, or is a mixture thereof; more preferably the hydroxy group containing compound is selected from the group consisting of polyethylene glycol, polypropylene glycol and polyethylene-propylene glycol, or is a mixture thereof.

8. The preparation according to one of claims 1 to 5, wherein the emulsifier is a carboxylic acid alkoxylate, preferably oleic acid ethoxylate.

9. A process for preparing a preparation according to one of claims 1 to 9.

10. The process according to claim 9, wherein the process is a reactive extrusion process, a belt line process, belt cast process or a hand cast process, preferably a belt line process.

11. The process according to claim 9 or 10 comprising the following steps:
(A1) mixing the compound reactive towards isocyanate with a molecular weight of at least 500 g/Mol with the defoamer and the emulsifier to obtain a pre-mixture, and
(A2) introducing the polyisocyanate to the pre-mixture, preferably at a temperature in the range of ≥ 50°C to ≤ 150°C to obtain a reaction mixture.

12. Use of the preparation according to one of claims 1 to 8 or as obtained according to one of claims 9 to 11 in an article.

13. An article comprising the preparation according to one of claims 1 to 8 or as obtained according to one of claims 9 to 11.

14. Foam bead made of the preparation according to one of claims 1 to 8 or as obtained according to one of claims 9 to 11.

## Patentansprüche

1. Zubereitung, umfassend ein thermoplastisches Polyisocyanat-Polyadditionsprodukt, das erhalten wird durch Umsetzen der Aufbaukomponenten:
(a) Polyisocyanat und
(b) gegenüber Isocyanat reaktive Verbindung mit einem zahlenmittleren Molekulargewicht von mindestens 500 g/mol,
(c) Wasser
in Gegenwart von
(d) mindestens einem Entschäumer und
(e) mindestens einem Emulgator,
wobei es sich bei dem Entschäumer um ein Polysiloxan handelt.

2. Zubereitung nach Anspruch 1, wobei es sich bei dem Produkt um einen thermoplastischen Polyurethanharnstoff (TPU-U) handelt.

3. Zubereitung nach einem der Ansprüche 1 bis 2, wobei das Produkt ohne Kettenverlängerungsmittel erhalten wird.

4. Zubereitung nach einem der Ansprüche 1 bis 3, wobei es sich bei dem Entschäumer um ein Organopolysiloxan aus der Gruppe bestehend aus Poly(alkylsiloxan), Poly(alkoxysiloxan), Poly(arylsiloxan), Poly-(aralkylsiloxan), Poly(aryloxysiloxan), Poly-(alicyclosiloxan) oder eine Mischung davon handelt und es sich bei dem Polysiloxan vorzugsweise um Poly(alkylsiloxan), weiter bevorzugt Polydimethylsiloxan, handelt.

5. Zubereitung nach einem der Ansprüche 1 bis 4, wobei es sich bei dem Emulgator um ein Tensid, vorzugsweise ein nichtionisches Tensid, handelt.

6. Zubereitung nach Anspruch 5, wobei es sich bei dem Tensid um ein Reaktionsprodukt einer Carbonsäure mit einer hydroxylgruppenhaltigen Verbindung handelt und wobei es sich bei der Carbonsäure um eine lineare, gesättigte oder ungesättigte C₂- bis C₃₆-Monocarbonsäure oder eine lineare, gesättigte oder ungesättigte C₂- bis C₃₆-Dicarbonsäure, vorzugsweise eine lineare, gesättigte oder ungesättigte C₁₂- bis C₂₀-Monocarbonsäure, weiter bevorzugt Ölsäure, handelt.

7. Zubereitung nach Anspruch 6, wobei die hydroxylgruppenhaltige Verbindung aus der Gruppe bestehend aus Ethanol, Ethylenglykol, Propylen-1,2-glykol, Propylen-1,3-glykol, Butylen-1,4-glykol, Butylen-2,3-glykol, Hexan-1,6-diol, Octan-1,8-diol, Neopentylglykol, Cyclohexandimethanol (1,4-Bis-(hydroxymethyl)cyclohexan), 2-Methylpropan-1,3-diol, Glycerin, Trimethylolpropan, Hexan-1,2,6-triol, Butan-1,2,4-triol, Trimethylolethan, Pentaerythritol, Chinitol, Mannitol, Sorbitol, Methylglykosid, Diethylenglykol, Triethylenglykol, Tetraethylenglykol, Polyethylenglykol, Dipropylenglykol, Polypropylenglykol, Polyethylenpropylenglykol, Dibutylenglykol und Polybutylenglykol ausgewählt ist oder eine Mischung davon ist und die hydroxylgruppenhaltige Verbindung weiter bevorzugt aus der Gruppe bestehend aus Polyethylenglykol, Polypropylenglykol und Polyethylenpropylenglykol ausgewählt ist oder eine Mischung davon ist.

8. Zubereitung nach einem der Ansprüche 1 bis 5, wobei es sich bei dem Emulgator um ein Carbonsäurealkoxylat, vorzugsweise Ölsäureethoxylat, handelt.

9. Verfahren zur Herstellung einer Zubereitung nach einem der Ansprüche 1 bis 9.

10. Verfahren nach Anspruch 9, wobei es sich bei dem Verfahren um ein Reaktivextrusionsverfahren, ein Bandstraßenverfahren, ein Bandgießverfahren oder ein Handgießverfahren, vorzugsweise ein Bandstraßenverfahren, handelt.

11. Verfahren nach Anspruch 9 oder 10, das die folgenden Schritte umfasst:
(A1) Mischen der gegenüber Isocyanat reaktiven Verbindung mit einem Molekulargewicht von mindestens 500 g/mol mit dem Entschäumer und dem Emulgator unter Erhalt einer Vormischung und
(A2) Eintragen des Polyisocyanats in die Vormischung, vorzugsweise bei einer Temperatur im Bereich von ≥ 50 °C bis ≤ 150 °C, unter Erhalt einer Reaktionsmischung.

12. Verwendung der Zubereitung nach einem der Ansprüche 1 bis 8 oder der gemäß einem der Ansprüche 9 bis 11 erhalten Zubereitung in einem Gegenstand.

13. Gegenstand, umfassend die Zubereitung nach einem der Ansprüche 1 bis 8 oder die gemäß einem der Ansprüche 9 bis 11 hergestellte Zubereitung.

14. Schaumperle, hergestellt aus der der Zubereitung nach einem der Ansprüche 1 bis 8 oder der gemäß einem der Ansprüche 9 bis 11 erhalten Zubereitung.

## Revendications

1. Préparation comprenant un produit de polyaddition de polyisocyanate thermoplastique qui est obtenu par mise en réaction des composants de construction :
(a) un polyisocyanate, et
(b) un composé réactif envers un isocyanate, doté d'un poids moléculaire moyen en nombre d'au moins 500 g/mole
(c) de l'eau
en la présence de
(d) au moins un antimousse, et
(e) au moins un émulsifiant
l'antimousse étant un polysiloxane.

2. Préparation selon la revendication 1, le produit étant un polyuréthane-urée thermoplastique (TPU-U) .

3. Préparation selon l'une des revendications 1 à 2, le produit étant obtenu sans extenseur de chaînes.

4. Préparation selon l'une des revendications 1 à 3, l'antimousse étant un organopolysiloxanes choisi dans le groupe constitué par un poly(alkylsiloxane), un poly(alkoxysiloxane), un poly(arylsiloxane), un poly(aralkylsiloxane), un poly(aryloxysiloxane), un poly(siloxane alicyclique), ou étant un mélange correspondant, préférablement le polysiloxane étant un poly(alkylsiloxane), plus préférablement un poly-diméthylsiloxane.

5. Préparation selon l'une des revendications 1 à 4, l'émulsifiant étant un tensioactif, préférablement un tensioactif non ionique.

6. Préparation selon la revendication 5, le tensioactif étant un produit de réaction d'un acide carboxylique avec un composé contenant un groupe hydroxy et l'acide carboxylique étant un acide monocarboxylique linéaire, saturé ou insaturé en C₂ à C₃₆ ou un acide dicarboxylique linéaire, saturé ou insaturé en C₂ à C₃₆, préférablement un acide monocarboxylique linéaire, saturé ou insaturé en C₁₂ à C₂₀, plus préférablement l'acide oléique.

7. Préparation selon la revendication 6, le composé contenant un groupe hydroxy étant choisi dans le groupe constitué par l'éthanol, l'éthylèneglycol, le propylène-1,2-glycol, le propylène-1,3-glycol, le butylène-1,4-glycol, le butylène-2,3-glycol, l'hexane-1,6-diol, l'octane-1,8-diol, le néopentylglycol, le cyclohexanediméthanol (1,4-bis-hydroxy-méthylcyclohexane), le 2-méthyl-propane-1,3-diol, le glycérol, le triméthylolpropane, l'hexane-1,2,6-triol, le butane-1,2,4-triol, le triméthyloléthane, le pentaérythritol, le quinitol, le mannitol, le sorbitol, un méthylglycoside, le diéthylèneglycol, le triéthylèneglycol, le tétraéthylèneglycol, un polyéthylèneglycol, le dipropylèneglycol, un polypropylèneglycol, un polyéthylène-propylèneglycol, le dibutylèneglycol et un polybutylèneglycol, ou étant un mélange correspondant ; plus préférablement le composé contenant un groupe hydroxy étant choisi dans le groupe constitué par un polyéthylèneglycol, un polypropylèneglycol et un polyéthylène-propylèneglycol, ou étant un mélange correspondant.

8. Préparation selon l'une des revendications 1 à 5, l'émulsifiant étant un alcoxylate d'acide carboxylique, préférablement l'éthoxylate d'acide oléique.

9. Procédé pour la préparation d'une préparation selon l'une des revendications 1 à 9.

10. Procédé selon la revendication 9, le procédé étant un procédé d'extrusion réactive, un procédé de ligne de courroie, un procédé de coulée de courroie ou un procédé de coulée manuelle, préférablement un procédé de ligne de courroie.

11. Procédé selon la revendication 9 ou 10 comprenant les étapes suivantes :
(A1) mélange du composé réactif envers un isocyanate doté d'un poids moléculaire d'au moins 500 g/mole avec l'antimousse et l'émulsifiant pour obtenir un prémélange, et
(A2) introduction du polyisocyanate dans le prémélange, préférablement à une température dans la plage de ≥ 50 °C à ≤ 150 °C pour obtenir un mélange réactionnel.

12. Utilisation de la préparation selon l'une des revendications 1 à 8 ou telle qu'obtenue selon l'une des revendications 9 à 11 dans un article.

13. Article comprenant la préparation selon l'une des revendications 1 à 8 ou telle qu'obtenue selon l'une des revendications 9 à 11.

14. Bille de mousse composée de la préparation selon l'une des revendications 1 à 8 ou telle qu'obtenue selon l'une des revendications 9 à 11.
